# EUROPÄISCHE PATENTSCHRIFT

(11) **EP 0 983 897 B1**
(45) Veröffentlichungstag und Bekanntmachung des Hinweises auf die Patenterteilung: **05.04.2006**
(21) Anmeldenummer: 99116457.5
(22) Anmeldetag: 21.08.1999
(51) Int. Cl.: B60P 1/02, B66F 7/08, B66F 11/00

(54) **Hebevorrichtung**
Lifting apparatus
Dispositif de levage

(30) Priorität: 02.09.1998 DE 19839835
(43) Veröffentlichungstag der Anmeldung: 08.03.2000
(73) Patentinhaber: Finkbeiner, Gerhard, 72250 Freudenstadt (DE)
(72) Erfinder: Finkbeiner, Gerhard, 72250 Freudenstadt (DE)
(74) Vertreter: Maser, Jochen

(56) Entgegenhaltungen:
- EP-A- 0 238 215
- WO-A-96/36555
- DE-A- 4 442 069
- US-A- 5 199 686

## Beschreibung

Die Erfindung betrifft eine Hebevorrichtung für Fahrzeuge, Montageeinheiten, Maschinen oder dergleichen gemäß dem Oberbegriff des Patentanspruchs 1.

Aus einem Prospekt der Firma OMER ist eine Hubvorrichtung bekannt geworden, welche ein Grundgestell mit zumindest einer Scherenanordnung aufweist. Die Scherenanordnung weist eine erste Lagerstelle mit einer Schwenkachse auf, um die ortsfest eine Strebe schwenkbar angeordnet ist. Die Strebe greift mit ihrem gegenüberliegenden Ende an einem Tragarm an und bildet eine zweite Lagerstelle. Der Tragarm, der durch die Strebe in einen ersten und zweiten Tragarmabschnitt unterteilt wird, weist an seinem freien Ende des zweiten Tragarmabschnittes, welches dem Grundgestell zugeordnet ist, eine Führung auf, durch die der zweite Tragarmabschnitt im Grundgestell horizontal hin und herbewegbar geführt ist. An diesem gegenüberliegenden Ende weist der Tragarm eine weitere Lagerstelle auf, an der eine Lastaufnahme angeordnet ist

Diese Hebevorrichtung wird über einen Hubzylinder auf und abbewegt, wobei der Hubzylinder mit einem Ende an der Strebe nahe der zweiten Lagerstelle angeordnet ist und mit seinem zweiten Ende an einer weiteren Strebe angreift, welche schwenkbar an dem ersten Tragarmabschnitt angeordnet und mit der Lastaufnahme verbunden ist. Durch diese Ausgestaltung ist eine doppelte Halbschere ausgebildet, welche durch einen dazwischenliegenden Hubzylinder angetrieben wird, um eine Auf- und Abbewegung zu erzielen. Diese Ausgestaltung einer Hebebühne ist konstruktiv aufwendig. Des weiteren baut diese Hubvorrichtung im Nichtgebrauchszustand hoch auf und ist somit für den Gebrauch ungünstig. Die Hebevorrichtung ist somit vorwiegend für den Einbau in einen Werkstattboden geeignet. Der relativ hohe Aufbau im Nichtgebrauchszustand findet seinen Grund darin, daß eine aufwendige Anordnung des Hubzylinders zwischen den Streben vorgesehen ist, damit insbesondere die erforderliche Kraft aufgebracht werden kann, um die Hebevorrichtung aus einer Totpunktlage beziehungsweise nicht ausgefahrenen Lage herauszubewegen. Damit die hohen Kräfte bewältigt werden können, werden konstruktiv aufwendige Maßnahmen ergriffen, die zu einem relativ hohen Aufbau der Hebevorrichtung in einer Ausgangsstellung führen. Des weiteren ist eine derartige Ausgestaltung der Hebevorrichtung auf geringe Anwendungsfälle begrenzt und in seiner Ausgestaltung kostenintensiv.

Aus der gattungsgemäßen DE 44 42 069 A1 geht eine Übergabeeinheit für ein automatisch gesteuertes Parkhaus für PKW hervor, bei dem ein Umsetzen eines Fahrzeuges auf einen Speicherboden durch vier Parallelkurbelgetriebe erfolgt, die in der Höhe durch Hydraulikzylinder verfahrbar sind. Zwei Parallelkurbelgetriebe sind durch an deren Enden angeordnete Rechen miteinander verbunden und werden auf das Fahrzeug zubewegt, um die Reifen zu untergreifen. Anschließend werden in dieser festgelegten Position die Hydraulikzylinder betätigt, um das linke und rechte Paar der Parallelkurbelgetriebe anzuheben. Bei dieser Übergabeeinheit ist die Bewegungsrichtung der Parallelkurbelgetriebe zu denen der Hydraulikzylinder getrennt und um 90° versetzt, wodurch eine aufwändige Anordnung gegeben ist. Darüber hinaus wirken ungünstige Kraftverhältnisse. Eine solche Übergabeeinheit ist für weitere Einsatzfälle nicht geeignet.

Aus der EP 0 238 215 A1 geht eine Hebevorrichtung mit einer Hebeplattform hervor, welche als Doppelschere ausgebildet ist. Dadurch wird ermöglicht, dass während dem Heben und Senken der Plattform eine horizontale Ausrichtung ermöglicht ist. Eine solche Doppelschere ist in der Konstruktion aufwändig und ermöglicht keine flachbauende Ausgestaltung. Des Weiteren ist die Flexibilität im Einsatz einer solchen Doppelschere begrenzt.

Der Erfindung liegt deshalb die Aufgabe zugrunde, eine Hebevorrichtung zu schaffen, welche in der Konstruktion einfach aufgebaut ist, günstige Kraftverhältnisse während des gesamten Hebevorganges, vorzugsweise zu Beginn des Hubweges, aufweist und konstruktiv flachbauend ausgestaltet werden kann. Des weiteren liegt der Erfindung die Aufgabe zugrunde, eine Hebevorrichtung zu schaffen, welche für eine Vielzahl von Einsatzfällen anwendbar ist.

Diese Aufgabe wird erfindungsgemäß durch die Merkmale des Anspruchs 1 gelöst.

Durch die erfindungsgemäße Ausgestaltung der Hebevorrichtung ist ermöglicht, daß die Hubvorrichtung einerseits eine geradlinige Hubbewegung nach dem Prinzip einer Stempelbühne durchführen kann und des weiteren konstruktiv flachbauend ausgelegt sein kann. Die erfindungsgemäße Ausgestaltung, insbesondere einer Halbschere, bel der die Lastaufnahme durch eine Parallelogrammführung horizontal ausgerichtet ist, kann des weiteren eine konstruktiv einfache Ausgestaltung ermöglicht sein, welche erhebliche Kräfte aufnehmen kann. Durch die Einleitung der Kraftresulderenden können des weiteren günstige Kraftverteilungen innerhalb der Scherenanordnung ermöglicht sein, wodurch kostengünstig durch geringen Materialaufwand eine Hebevorrichtung geschaffen sein kann.

Durch die Anordnung einer Lastaufnahme, welche im wesentlichen vor einer fünften Lagerstelle liegt bzw. außerhalb des Bewegungsraumes zwischen der ersten, vierten und fünften Lagerstelle kann eine flach bauende Anordnung geschaffen werden. Ein dabei zwischen der Krafteinleitung der Kraftresultierenden und der fünften Lagerstelle entstehende Hebelarm ist vernachlässigbar und kann darüber hinaus durch die Zugstange problemlos kompensiert werden. Es kann auch vor gesehen sein, daß die Kraftaufnahme im Bereich der fünften Lagerstelle liegt.

Nach einer weiteren vorteilhaften Ausgestaltung ist vorgesehen, daß die Parallelogrammführung als Zugstange ausgebildet ist, wobei die fünfte Lagerstelle der Scherenanordnung die Hubbewegung durchläuft. Die Kraftresultierende bzw. die Lastaufnahme ist derart zur fünften Lagerstelle vorgesehen, daß ausschließlich Zugkräfte auf die Zugstange wirken können, wodurch deren Ausgestaltung wesentlich gegenüber einer Auslegung auf Druck vereinfacht werden kann.

Eine weitere vorteilhafte Ausgestaltung sieht vor, daß die Parallelogrammführung als zumindest eine weitere Scherenanordnung mit oder ohne Hubeinheit ausgebildet ist, die mit einem an der ersten Scherenanordnung angreifenden Verbindungsmittel gekoppelt ist. Bei dieser alternativen Ausführungsform kann die Zugstange entfallen. Des weiteren kann die fünfte Lagerstelle die Hubbewegung durchlaufen oder fest mit dem Boden verankert sein. Diese weitere alternative Ausführungsform weist den Vorteil auf, daß aufgrund der Bauteilidentität durch die Verwendung von beispielsweise zwei Scherenanordnungen eine Kostenreduzierung gegeben sein kann. Des weiteren kann sich dadurch die Wartung und Montage vereinfachen.

Durch eine spitzwinklige Anordnung von zumindest einer Hubeinheit zu einer Strebe einer Scherenanordnung, welche an einem Tragarm angreift, ist vorteilhafterweise ermöglicht, daß insbesondere beim Anheben der Last aus einer Ruheposition günstige Kraftverhältnisse gegeben sind. Durch diese Anordnung kann in einer Ruhetage der Hebevorrichtung eine Totpunktlage der Hubeinheit vermieden und mit verhältnismäßig geringem Kraftaufwand die Hubbewegung durchgeführt werden. Gleichzeitig kann durch diese Ausgestaltung ermöglicht sein, daß eine flachbauende Hebevorrichtung geschaffen werden kann. Bei einem Einbau in einen Boden bzw. Werkstattboden weist dies den Vorteil auf, daß nur minimale Fundamentarbeiten erforderlich sind. Bei einer Anordnung auf dem Boden kann eine derartig niedrig beziehungsweise flach aufbauende Hebevorrichtung problemlos von Fahrzeugen überfahren werden. Des weiteren kann durch die minimale Bauhöhe eine Verringerung der Materialkosten und somit der Herstellungskosten gegeben sein.

Nach einer weiteren vorteilhaften Ausgestaltung der Erfindung ist vorgesehen, daß eine dritte Lagerstelle, welche durch den Angriff der Hubeinheit an dem Tragarm gebildet ist, außerhalb einer Achse zwischen der zweiten und vierten Lagerstelle vorgesehen ist. Dadurch kann der Hubzylinder eine von der Strebe im Ruhezustand abweichenden Lage aufweisen, wodurch ermöglicht ist, daß der Hubzylinder unter einem spitzen Winkel in Richtung Hubbewegung angestellt ist. Dadurch kann entsprechend der Anstellung des Winkels die Kraft entsprechend einer Kosinus-Funktion reduziert werden. Vorteilhafterweise kann in Abhängigkeit der Größe des Zylinders der Anstellwinkel gegenüber einer Horizontalen angepaßt werden, so daß einerseits die Scherenanordnung im zusammengeklappten Zustand der Hebevorrichtung flachbauend ausgebildet ist und andererseits der Krafteinsatz optimiert wird.

Nach einer weiteren vorteilhaften Ausgestaltung der Erfindung ist vorgesehen, daß zumindest eine Hubeinheit um die Drehachse der ersten Lagerstelle schwenkbar angeordnet ist. Durch diese Ausgestaltung können definierte und einfach nachvollziehbare Kraftverhältnisse geschaffen werden. Gleichzeitig kann dadurch eine Vereinfachung in der konstruktiven Ausgestaltung ermöglicht sein.

Nach einer weiteren vorteilhaften Ausgestaltung der Erfindung ist vorgesehen, daß die Länge der Strebe der Länge des ersten und zweiten Trägerarmabschnittes entspricht. Dies bedeutet wiederum, daß zwischen der Strebe und dem zweiten Trägerarmabschnitt vorteilhafterweise während der gesamten Hubbewegung ein gleichschenkliges Dreieck ausgebildet wird, wodurch vorteilhafterweise gleichwirkende Kraftverhältnisse gegeben sein können. Gleichzeitig kann durch diese konstruktive Ausgestaltung ermöglicht werden, daß ausschließlich eine senkrecht zur Auflagefläche erfolgende Hubbewegung erzielt werden kann. Somit entspricht die Hubbewegung der erfindungsgemäßen Hebevorrichtung der einer Stempelbühne.

Diese haben unter anderem den Vorteil, daß sie einen geringen räumlichen Platzbedarf erfordern, da während der Hubbewegung keine Schwenkbewegung gegeben ist, welche zusätzlich statische Probleme mit sich bringen kann.

Nach einer weiteren vorteilhaften Ausgestaltung der Erfindung ist vorgesehen, daß die Zugstange an einem Ende an dem Lastaufnahmemittel getrennt von einer fünften Lagerstelle angreift und an dem gegenüberliegenden Ende an einem Hebel drehbar angeordnet ist, der drehfest an der vierten Lagerstelle vorgesehen ist. Durch diese Zugstange kann eine sogenannte Parallelogrammführung geschaffen werden, wodurch ermöglicht ist, daß das Lastaufnahmemittel eine Auflagefläche in einer horizontalen Ausrichtung während der gesamten Hub- und Senkbewegung beibehalten kann. Dadurch kann eine hohe Sicherheit während der Auf- und Abbewegung von Lasten durch die Hebevorrichtung gegeben sein.

Nach einer weiteren vorteilhaften Ausgestaltung der Erfindung ist vorgesehen, daß das Grundgestell instationär oder stationär in oder auf einem Boden anordenbar ist. Dadurch kann eine flexible Ausgestaltung der Hebevorrichtung ermöglicht sein. Darüber hinaus ist vorteilhafterweise vorgesehen, daß die Scherenanordnungen einzeln zur Ausgestaltung einer Hebevorrichtung einsetzbar sind oder auch beispielsweise paarweise einander gegenüberliegend eingesetzt werden können. Bei einer Ausführungsform können vorteilhafterweise zwei Hubeinheiten verwendet werden. Aufgrund der Reduzierung der aufzubringenden Kraft pro Hubeinheit kann eine Verringerung des Durchmessers der Hubeinheit gegeben sein kann, wodurch eine weitere Reduzierung der Gesamthöhe der Hebevorrichtung im Nichtgebrauchszustand ermöglicht sein kann.

Darüber hinaus ist vorteilhafterweise vorgesehen, daß das Grundgestell als Fahrschiene ausgebildet sein kann. Bei dieser Ausführungsform ist die Scherenanordnung um beispielsweise 180° gedreht, so daß das Lastaufnahmemittel sich an dem Boden abstützt und die der Scherenanordnung gegenüberliegenden Fläche des Grundgestelles als Auffahrfläche beispielsweise für Kraftfahrzeuge ausgebildet ist.

Unabhängig von der Verwendung des Grundgestelles kann die erfindungsgemäße Anordnung beispielsweise für Kraftfahrzeuge mit einem Gesamtgewicht von weniger als 7,5 t als auch mit einer darüberliegenden Gesamtlast eingesetzt werden.

Nach einer weiteren vorteilhaften Ausgestaltung der Erfindung ist vorgesehen, daß die zweite, vierte und fünfte Lagerstelle, welche an dem Tragarm vorgesehen sind, in einer gemeinsamen Ebene liegen. Dadurch kann eine konstruktiv einfache und stabile Ausgestaltung des Tragarmes sowie eine flachbauende Anordnung ermöglicht sein.

Nach einer weiteren vorteilhaften Ausgestaltung der Erfindung ist vorgesehen, daß das Grundgestell einen U-förmig ausgebildeten Rahmen aufweist, dessen zwei parallel einander gegenüberliegenden Schenkel vorzugsweise U-profilförmig ausgebildet sind und derart aufeinander zuweisend angeordnet sind, daß ein Führungsschlitten darin anordenbar ist. Der Führungsschlitten kann auch als Gleitlager ausgebildet sein. Durch die vorteilhafterweise nicht in einer gemeinsamen horizontal Ebene liegenden Drehachsen von zwei Führungsrollen ist ermöglicht, daß der Führungsschlitten in den profilierten Schenkeln spielfrei bzw. nahezu spielfrei geführt werden kann. Die Führungsrollen sind vorteilhafterweise mit ihrer Abrollfläche an die Profilierung der U-förmigen Schenkel angepaßt, so daß einerseits eine große Anlagefläche zur Aufnahme der Kräfte gegeben ist und andererseits ein reibungsarmes Abrollverhalten ermöglicht sein kann.

Nach einer weiteren vorteilhaften Ausgestaltung der Erfindung ist vorgesehen, daß zwischen den Führungsrollen der Führung die vierte Lagerstelle angeordnet ist, welche vorteilhafterweise während der gesamten Hubbewegung auf derselben horizontalen Ebene hin und herbewegbar ist. Vorteilhafterweise ist diese horizontale Ebene näher zum Boden vorgesehen, als die Drehachsen der Führungsrollen. Dadurch kann wiederum ermöglicht sein, daß die an der vierten Lagerstelle über einen Schwenkhebel angeordnete Führungsstange flachbauend zum Trägerarm angeordnet sein kann.

Nach einer weiteren vorteilhaften Ausgestaltung der Erfindung ist vorgesehen, daß der Tragarm als geschlossener Rahmen ausgebildet ist, der eine rechte und linke Tragarmstrebe aufweist, welcher in der dritten und vierten Lagerstelle durch Verbindungselemente fest zueinander beabstandet ist und in der fünften Lagerstelle ein Querjoch als Lastaufnahmemittel aufweist. Die Verbindungselemente sind starr ausgebildet und erhöhen die Steifigkeit des Tragarmes insbesondere im Bereich der dritten Lagerstelle. Das Querjoch des Tragarmes ist vorteilhafterweise an die jeweiligen Anwendungsfälle anpaßbar. Durch den geschlossenen Rahmen kann ein geschlossener Kraftfluß ermöglicht sein, wodurch eine gewichts- und materialreduzierende Auslegung bei gleichbleibender Hubkraft und Steifigkeit des Rahmens gegeben sein kann.

Nach einer weiteren vorteilhaften Ausgestaltung der Erfindung ist vorgesehen, daß die Hubeinheit mittelbar an dem Tragarm angreift und vorzugsweise ein Drehhebel zwischengeschalten ist. Dadurch kann ermöglicht sein, daß insbesondere bei Beginn der Hubbewegung durch das zusätzliche Hebelverhältnis eine Reduzierung der benötigten Kraft erzielt werden kann, um die Hebevorrichtung aus einer Nichtgebrauchslage herauszuführen, da insbesondere zu Beginn der Hubbewegung die Kraftverhältnisse relativ ungünstig sind. Der Drehhebel weist vorteilhafterweise zu dessen Lagerstelle am Tragarm einen ersten längeren Hebelarm auf, an dessen Ende die Hubeinheit angreift. Ein im wesentlichen gegenüberliegenden Hebelarm, der kürzer ausgebildet ist, ist eine Druckrolle vorgesehen, welche ihrerseits an der Strebe angreift. Somit kann zu Beginn der Hubbewegung nahezu ausschließlich durch die Drehbewegung des Drehhebels eine Anhebung des Lastaufnahmemittels ermöglicht sein. Nachdem ein gewisser Hubweg überfahren wurde ist vorteilhafterweise vorgesehen, daß die Drehbewegung über einen an dem Drehhebel vorgesehenen Anschlag gesperrt wird, so daß anschließend die weitere Hubbewegung durch ein Ausfahren eines Hubzylinders erfolgen kann. Während des weiteren Ausfahrens kann die Druckrolle des Drehhebels von der Strebe abheben, so daß ausschließlich die Hubbewegung durch den Hubzylinder bewirkt werden kann.

Weitere vorteilhafte Ausgestaltungen und Weiterbildungen sind in den weiteren anhängigen Ansprüchen angegeben.

Anhand der nachfolgenden Beschreibung, Ansprüche und Zeichnungen sind besonders vorteilhafte Ausführungsbeispiele wiedergegeben. Es zeigen:
- Figur 1: eine schematische Seitenansicht der erfindungsgemäßen Hebevorrichtung in einer ausgefahrenen Position,
- Figur 2: eine schematische Seitenansicht der erfindungsgemäßen Hebevorrichtung in einer ruhenden Position,
- Figur 3: eine schematische Draufsicht auf die erfindungsgemäße Hebevorrichtung gemäß Figur 2,
- Figur 4: eine schematische Seitenansicht einer alternativen Ausführungform der erfindungsgemäßen Hebevorrichtung in ausgefahrener Position,
- Figur 5: eine schematische Seitenansicht der alternativen erfindungsgemäßen Ausführungsform in einer teilweise ausgefahrenen Position,
- Figur 6: eine schematische Seitenansicht der Ausführungsform gemäß Figur 4 und 5 in ruhender Position,
- Figur 7: eine schematische Draufsicht der alternativen Ausführungsform gemäß Figur 6,
- Figur 8: eine alternative Anordnung der erfindungsgemäßen Ausführungsform in Figur 1 bis 3,
- Figur 9a/b: eine schematische Seiten- und Vorderansicht einer ersten Anwendungsmöglichkeit,
- Figur 10 a/b: eine schematische Seiten- und Vorderansicht einer weiteren alternativen Ausführungsform und Einbaumöglichkeit und
- Figur 11 a/b: eine schematische Seiten- und Vorderansicht eines weiteren alternativen Anwendungsfalles der erfindungsgemäßen Hebevorrichtung.

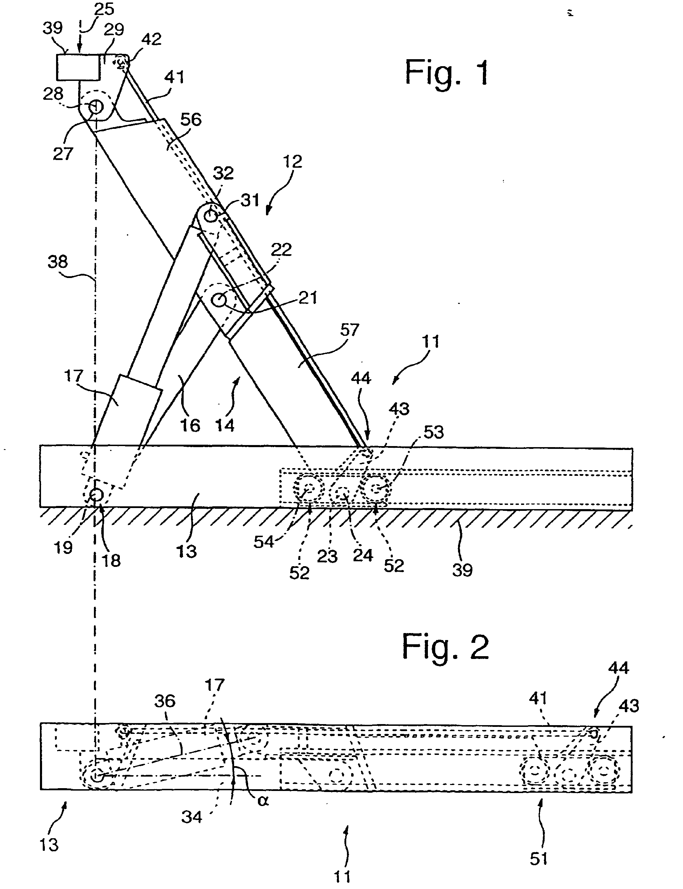

In Figur 1 ist in einer Seitenansicht schematisch eine erfindungsgemäße Hebevorrichtung 11 in einer ausgefahrenen Position dargestellt. In Figur 2 ist die Hebevor richtung 11 in einer ruhenden Position beziehungsweise in einer Nichtgebrauchslage dargestellt. Die Hebevorrichtung 11 ist als Halbschere ausgebildet und weist eine Scherenanordnung 12 auf, welche an einem Grundgestell 13 vorgesehen ist. Die Scherenanordnung 12 weist einen Tragarm 14 auf, welcher durch eine Strebe 16 und einer Hubeinheit 17 aus einer ruhenden Position in eine ausgefahrene Position übergeführt werden kann. Die Strebe 16 ist an einer ersten Lagerstelle 18, die vorzugsweise als Festlager ausgebildet ist, um eine der ersten Lagerstelle 18 zugeordneten Drehachse 19 positioniert. Die Verbindung zwischen einem der sten Lagerstelle 18 gegenüberliegenden Ende der Strebe 16 und dem Tragarm 14 ist durch eine zweite Lagerstelle 21 gebildet. Die Lagerstelle 21 weist eine Drehachse 22 auf, um welche sowohl der Tragarm 14 als auch die Strebe 16 schwenkbar angeordnet ist. An einem unteren, dem Grundgestell 13 zugeordneten Ende des Tragarmes 14 ist eine vierte Lagerstelle 23 mit einer Drehachse 24 vorgesehen, welcher an einer parallel zum Grundgestell 13 hin und her bewegbaren Führung 26 vorgesehen ist. An einem der vierten Lagerstelle 23 des Tragarmes 14 gegenüberliegenden Ende des Tragarmes ist eine fünfte Lagerstelle 27 vorgesehen, welche schwenkbar um eine Drehachse 28 ein Lastaufnahmemittel 29 auf nimmt. Die zweite, vierte und fünfte Lagerstelle 21, 23, 27 liegen vorteilhafterweise auf einer gemeinsamen Geraden.

Die Hubeinheit 17 ist in diesem Ausführungsbeispiel als ein hydraulischer Hubzylinder ausgebildet, jedoch nicht darauf beschränkt Die Hubeinheit 17 ist vorteilhafterweise an einem dem Grundgestell 13 zugewandten Ende schwenkbar um die Drehachse 19 angeordnet. Das dem Grundgestell 13 zugewandten Ende der Hubeinheit 17 kann jedoch auch an einer anderen Stelle am Grundgestell 13 angreifen. Das dem Grundgestell 13 gegenüberliegende Ende der Hubeinheit 17 greift an einer dritten Lagerstelle 31 an dem Tragarm 14 an, in der eine Drehachse 32 liegt. Die Drehachse 32 beziehungsweise dritte Lagerstelle 31 ist getrennt von ' der Drehachse 22 beziehungsweise der zweiten Lagerstelle 21 angeordnet. Vorteilhafterweise ist eine Ausgestaltung derart vorgesehen, daß in einer ruhenden Position der Hebevorrichtung 11 zwischen einer durch die erste und vierte Lagerstelle 18, 23 verlaufenden Achse 34 und einer durch die erste und dritte Lagerstelle 18, 31 verlaufenden Achse 36 der Hubeinheit 17 ein spitzer Winkel α ausgebildet ist. Des weiteren ist vorgesehen, daß die Lagerstelle 21 zum Angriff der Strebe 16 an dem Tragarm 14 derart ausgebildet ist, daß die zweite Lagerstelle 21 mittig zur vierten Lagerstelle 23 und fünften Lagerstelle 27 angeordnet ist. Dadurch kann zwischen der ersten Lagerstelle 18, der zweiten Lagerstelle 21 und der vierten Lagerstelle 23 während der gesamten Hubbewegung ein gleichschenkliges Dreieck ausgebildet werden, wodurch statisch günstige Kraftverhältnisse gegeben sind. Des weiteren kann dadurch erzielt werden, daß eine ausschließlich senkrechte Hubbewegung der fünften Lagerstelle 27 entlang der Geraden 38 erfolgt. Gleichzeitig ist für die geradlinige beziehungsweise senkrecht zum Grundgestell 13 beziehungsweise zu einem Boden 39 verlaufende Hubbewegung von Vorteil, daß die erste Lagerstelle 18 und die vierte Lagerstelle 23 auf einer gemeinsamen Ebene liegen.

Das Lastaufnahmemittel 29 weist eine Oberfläche 39 auf, welche über eine Zugstange 41 während der gesamten Hubbewegung in einer horizontalen Ausrichtung gehalten wird. Die Zugstange 41 greift über eine sechste Lagerstelle 42 unmittelbar an dem Lastaufnahmemittel 29 an. Gegenüberliegend ist die Zugstange 41 mit einem Hebel 43 gelenkig verbunden und bildet eine siebte Lagerstelle 44. Der Hebel 43 ist mit der vierten Lagerstelle 23 der Achse 24 starr verbunden. Durch diese Anordnung kann eine sogenannte Parallelogrammführung gegeben sein, die in jeglicher Hubposition entlang der Hubbewegung die Oberfläche 39 der Lastaufnahmemittel 29 horizontal ausrichtet. Die Führungsstange 41 kann vorteilhafterweise gleichzeitig als Abdeckung ausgebildet sein, welche in der Nullposition der Hebevorrichtung eine im wesentlichen geschlossene Oberfläche des Grundgestells 13 ausbildet

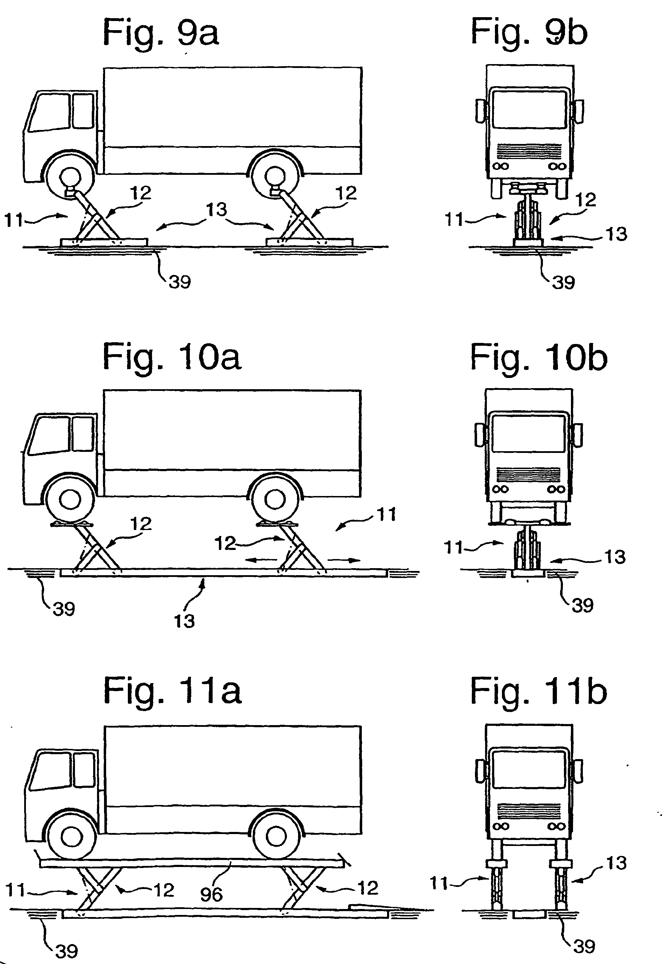

Das Lastaufnahmemittel 29 greift an einer zu hebenden Last derart an, daß die Kraftresultierende 25 entlang der Geraden 38 wirkt oder außerhalb eines Bewegungsraumes an dem Lastaufnahmemittel 29 angreift, der durch die erste, vierte und fünfte Lagerstelle 18, 23, 27 bestimmt ist. Die Lastaufnahmemittel 29 können beispielsweise an Achsen eines Kraftfahrzeuges angreifen (Figur 9a und b). Des weiteren können Lastaufnahmemittel 29 vorgesehen sein, welche Luftreifen von Kraftwagen untergreifen (Figur 10 a und b). Darüber hinaus können weitere, beispielsweise mit Dämpfungselementen belegte tellerförmige Lastaufnahmemittel 29 oder U-förmige Aufnahmen vorgesehen sein, um die entsprechenden Lasten sicher heben zu können.

Das Grundgestell 13 ist vorteilhafterweise U-förmig ausgebildet und weist einen linken und rechten Schenkel 47, 48 auf, die durch ein vorzugsweise rechteckförmiges Profilrohr 49 zueinander beabstandet sind. Dieses Profilrohr 49 ist vorteilhafterweise flach rechteckförmig ausgebildet, damit die Lastaufnahme 29 einerseits in der erforderlichen Stärke zur Aufnahme der Traglast ausgebildet sein kann und andererseits in der unteren Position gegenüber der sonstigen durch die Scherenanordnung 12 bedingten lichten Höhe nicht überragt. Die Schenkel 47, 48 weisen ein U-förmiges Profil auf, welches aufeinander zuweisend angeordnet ist. In diesem U-förmigen Profil läuft die Führung 26, welche einen Führungsschlitten 51 mit zwei daran angeordneten Führungsrollen 52 aufweist. Die Führungsrollen 52 sind in bezug auf die Konizität der Lauffläche vorteilhafterweise auf die korrespondierenden Anlagefläche der U-profilförmigen Schenkel 47, 48 angepaßt. Die Drehachsen 53, 54 der Führungsrollen 52 können in einer Ebene liegen. Vorteilhafterweise sind diese jedoch zumindest geringfügig zueinander versetzt zueinander angeordnet, so daß eine nahezu spielfreie Führung des Führungsschlitten 51 in dem Grundgestell 13 ermöglicht ist. Zwischen den Drehachsen 53, 54 der Führungsrollen 52 ist die vierte Lagerstelle 23 angeordnet. In einer Nichtgebrauchslage gemäß Figur 2 liegen die Drehachsen 19 der ersten Lagerstelle 18, die Drehachse 24 der vierten Lagerstelle 23 als auch die Drehachse 22 der zweiten Lagerstelle 21 in einer gemeinsamen Ebene. Die Schenkel 47, 48 können an weitere Lagerarten in der Querschnittsgeometrie angepaßt sein.

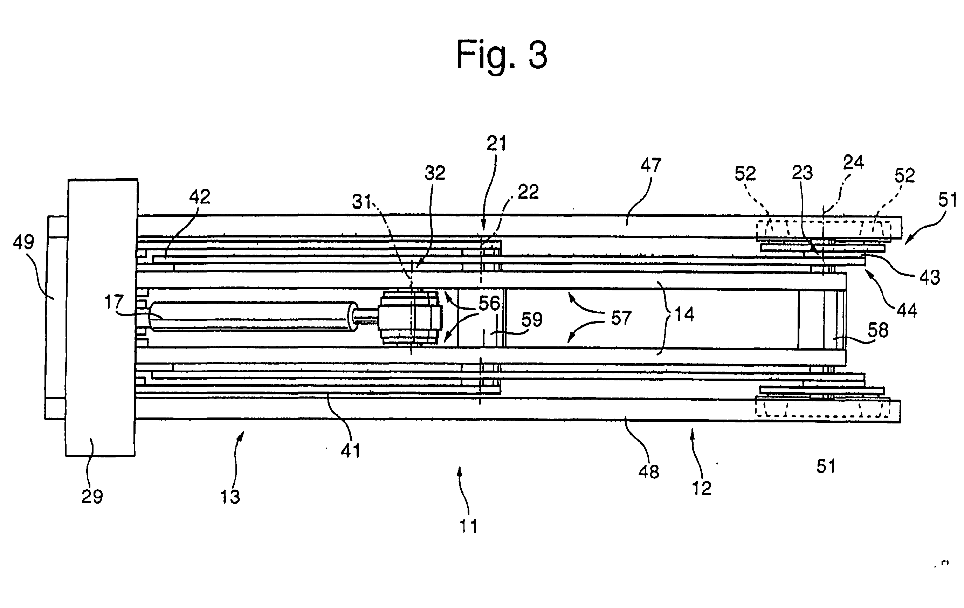

Der Tragarm 14, der durch die zweite Lagerstelle 21 in einen ersten Tragarmabschnitt 56 und in einen zweiten Tragarmabschnitt 57 unterteilt ist, weist jeweils einen geschlossenen Rahmen auf, wie auf der Draufsicht gemäß Figur 3 zu kennen ist. Der rechte und linke Tragarm 14 werden in der vierten Lagerstelle 23 durch das starre Verbindungsstück 58, im Bereich der zweiten Lagerstelle durch das starre Verbindungsstück 59 und im Bereich der fünften Lagerstelle 27 durch die Lastaufnahmemittel 29 zu einem geschlossenen Rahmen miteinander verbunden.

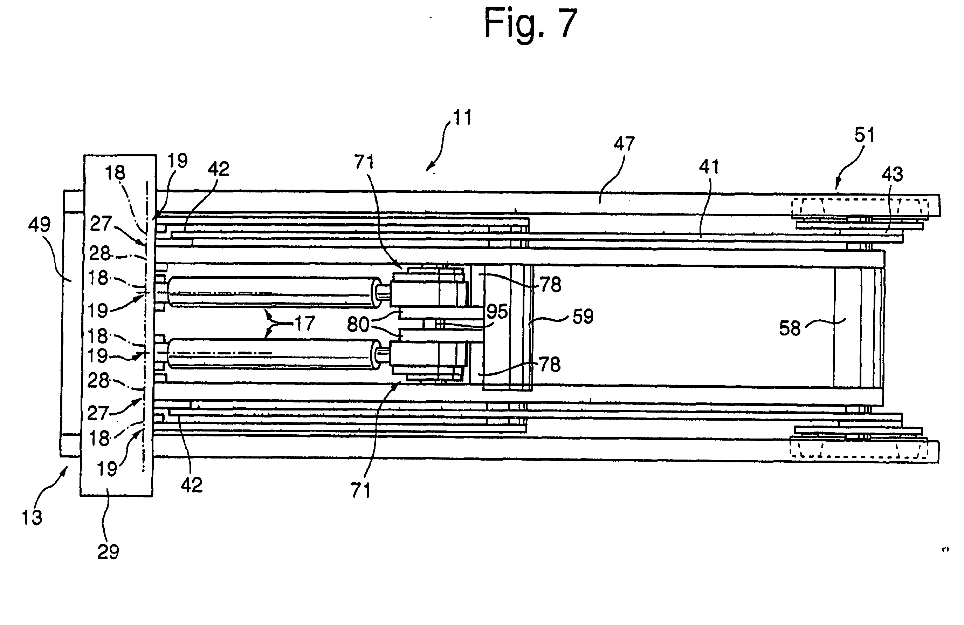

Die Hebevorrichtung 11 gemäß den Figuren 1 bis 3 kann mit einem Hubzylinder als auch mit zwei Hubzylindern gemäß Figur 7 oder auch mit mehreren Hubzylindem ausgebildet sein. Bei der Ausgestaltung mit mehreren Hubzylindern kann jeder einzelne Hubzylinder im Durchmesser geringer ausgebildet werden, wodurch die Gesamtbauhöhe noch weiter verringert werden kann, wie aus Figur 2 und 7 deutlich wird. Beizubehalten ist jedoch ein spitzer Winkel zwischen den Achsen 34 und 36 der Hebevorrichtung 11 in einer ruhenden Position gemäß Figur 2 und 7. Dieser Winkel kann selbstverständlich auch noch kleiner ausgebildet sein. In Abhängigkeit der geometrischen Abmessungen kann dieser selbstverständlich variieren, ohne daß von der prinzipiellen Bauweise abgewichen wird, wonach die dritte Lagerstelle 31 räumlich getrennt zur zweiten Lagerstelle 21 angeordnet und gegenüber der horizontal verlaufenden Achse 34 zumindest geringfügig oberhalb angeordnet ist.

Das Grundgestell 13 ist insbesondere im Bereich des Profilrohres 49 derart ausgebildet, daß ein Freiraum für die Lastaufnahme 29 geschaffen ist, so daß eine flachbauende Hebevorrichtung 11 ermöglicht ist. Insbesondere bei Anwendungsfällen, bei denen die Hebevorrichtung nicht im Boden eingebaut werden kann, ist es von besonderem Vorteil, flachbauende Hebevorrichtungen 11 gemäß der Erfindung einzusetzen, da diese leicht überfahren werden können.

Die Hebevorrichtung 11 gemäß den Figuren 1 bis 3 kann des weiteren dahingehend weitergebildet werden, daß an dem ersten Tragarmabschnitt 56 nochmals eine Halbschere vorgesehen ist, welche an dem Lastaufnahmemittel 29 angreift. Dadurch kann erzielt werden, daß bei dem gleichen Betrag des Hubes eine Verkürzung der Gesamtbaulänge erzielt werden kann. Eine weitere Aneinanderreihung von derartigen Halbscheren ist ebenso denkbar unter der Voraussetzung, daß die statischen Anforderungen erfüllt sind.

Ebenso kann die Hebevorrichtung 11 als Doppelschere mit den erfindungsgemäßen Merkmalen ausgebildet sein.

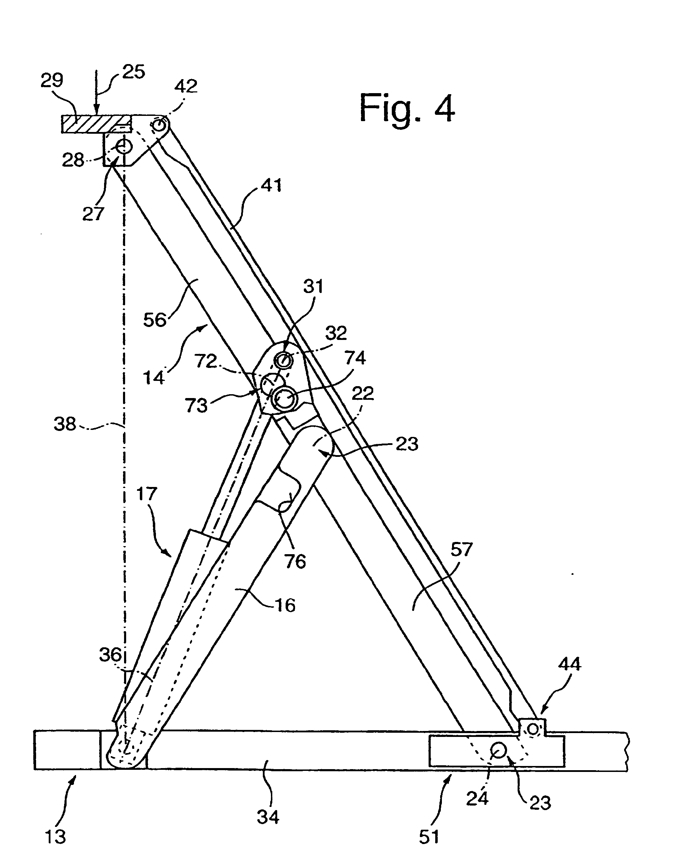

In den Figuren 4 bis 7 ist eine alternative Ausfühningsform dargestellt. Hinsichtlich den konstruktiv gleich ausgebildeten Merkmalen wird auf die Figuren 1 bis 3 ver wiesen.

Diese Ausführungsform weist bei gleichbleibender Flachbauweise den Vorteil auf, daß aufgrund einer Hebelübersetzung aus einer Nullpunktlage beziehungsweise aus einer Ruhelage heraus günstigere Kraftverhältnisse gegeben sind, um die Hubbewegung einzuleiten. Die Hubeinheit 17 greift über eine Drehhebel 71 an dem Tragarm 14 beziehungsweise dem ersten Tragarmabschnitt 56 an. Dieser Drehhebel ist quasi zwischengeschalten worden. Der Drehhebel 71 ist um eine Drehachse 72 über eine achte Lagerstelle 73 an dem ersten Tragarmabschnitt 56 schwenkbar angeordnet. Von der Drehachse 72 erstreckt sich ein erster Hebelarm zur dritten Lagerstelle 31, an der die Hubeinheit 17 befestigt ist. Ein zweiter Hebelarm erstreckt sich von der Drehachse 72 zur Druckrolle 74, welche in einer Nullpunktlage in einer an der Strebe 16 angebrachten Halterung mit einer Ausnehmung 76 anliegt. Die Ausnehmung 76 weist eine Auflagefläche für die Druckrolle 74 auf, welche zumindest unterhalb der Geraden 34 liegt.

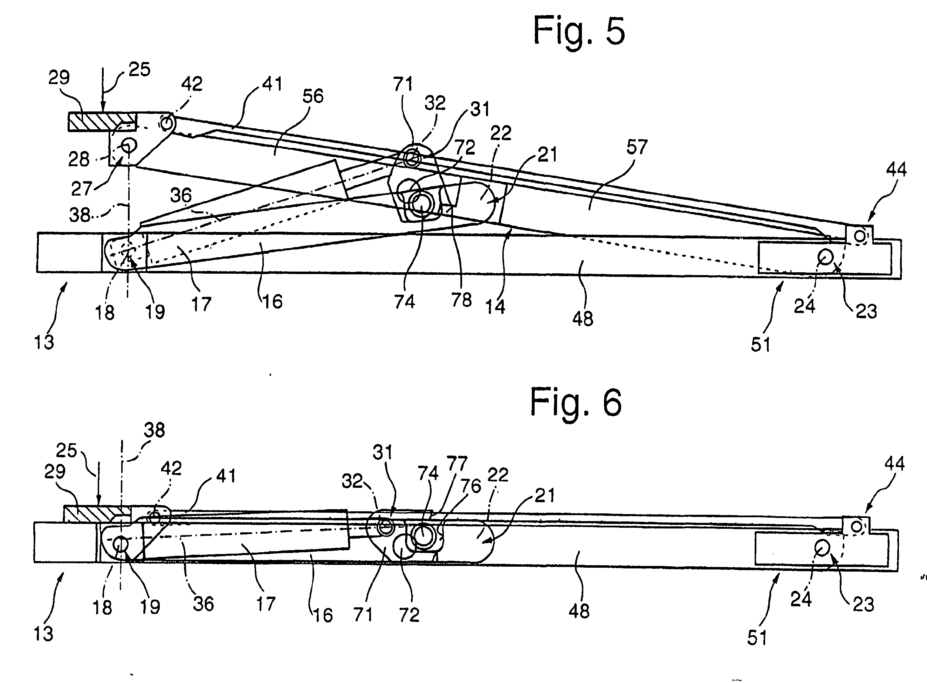

Zu Beginn der Hubbewegung kann zunächst der Hubzylinder 17 zumindest teilweise ausgefahren werden, bevor die Drehbewegung des Drehhebels 71 durch einen am Drehhebel 71 angeordneten Anschlag 77 gesperrt wird, welcher an einem Vorsprung 78 anliegt, der der zweiten Lagerstelle 21 zugeordnet ist. Dadurch kann der spitze Winkel α vergrößert werden, wodurch die Kraftverhältnisse für die Hubbewegung günstiger werden. Die erforderliche Kraft geht entsprechend einer Kosinus-Funktion ein, um die Hubbewegung durchzuführen. Somit wird also eine erste Hubbewegung zunächst dadurch erzielt, daß die Hebelverhältnisse des Drehhebels 71 ausgenützt werden. Dieser Bewegungsablauf ist beispielsweise bei einer Betrachtungsreihenfolge von Figur 6 nach Figur 5 dargestellt.

Der weitere Verlauf der Hubbewegung, der beispielsweise in Figur 5 und Figur 4 dargestellt ist, erfolgt ausschließlich durch den Zylinder. Der Drehhebel 71 ist derart ausgestaltet, daß dieser die weitere Hubbewegung der Hebevorrichtung 11 beziehungsweise die Drehbewegung des Tragarmes 14 nicht behindert. Vorteilhafterweise kann der Anschlag 77 bei einem sehr weit ausgefahrenen Hubzylinder sich von dem Vorsprung 78 lösen. Die Druckrolle 74 ist vorteilhafterweise dergestalt aufgebaut, daß ein im Durchmesser relativ großes Befestigungselement vorgesehen ist, welches ein Gleitrollenlager oder dergleichen aufnimmt, auf dem vorteilhafterweise eine gehärtete Rolle umlaufen kann. Durch die Zwischenschaltung eines leicht laufenden Lagers kann erzielt werden, daß eine reibungsarme Abwälzung der Druckrolle 74 in der Ausnehmung 76 ermöglicht ist, wodurch die Drehbewegung erleichtert sein kann. Gleichzeitig können entsprechende Vorkehrungen an der achten Lagerstelle 73 vorgesehen sein, damit der Drehhebel 71 leicht schwenkbar ist.

Die in den Figuren 4 bis 7 dargestellte Ausführungsform kann ebenso mit nur einem Hubzylinder in Analogie zu der Ausführungsform gemäß den Figuren 1 bis 3 betrieben werden. Ebenso können auch mehrere Hubzylinder eingesetzt werden. Damit die Kräfte während der Hubbewegungen der Zylinder 17 auf den Tragarm 14 besser übertragen werden, sind zusätzliche Lastaufnahmemittel 80 vorgesehen. Des weiteren kann eine gemeinsame Lagerachse 95 vorgesehen sein. Die in den Figuren 4 bis 7 dargestellte Ausführungsform weist beispielsweise ein Gleitlager als Führung auf. An diesem Gleitlager ist die Zugstange 41 unmittelbar schwenkbar befestigt. Die Zugstange 41 liegt des weiteren oberhalb des Tragarms 14 in der Nullpunktlage und kann als Abdeckung vorgesehen sein, um die Hebevorrichtung im wesentlichen geschlossen auszubilden.

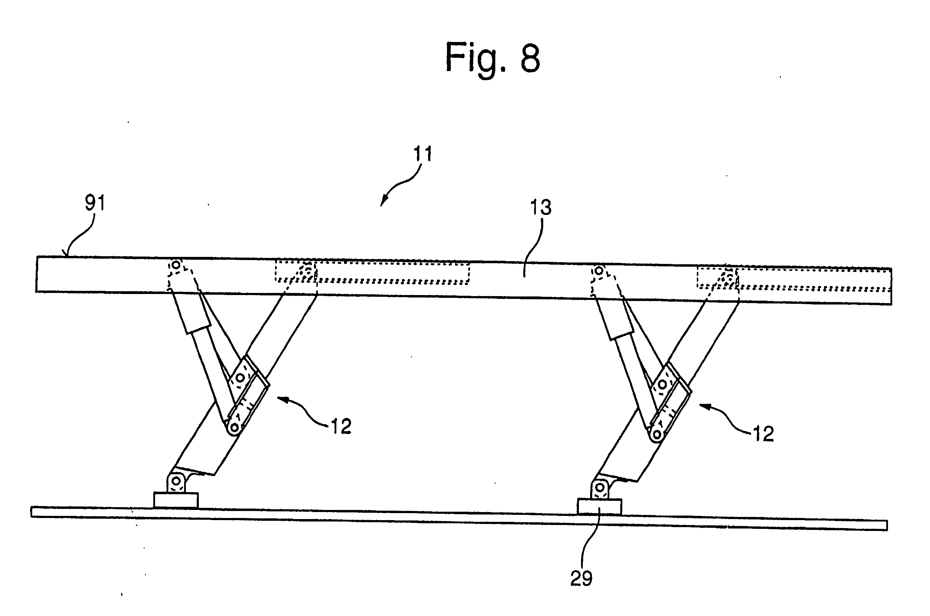

In Figur 8 ist eine alternative Anordnung der erfindungsgemäßen Ausführungsform gemäß den Figuren 1 bis 3 dargestellt. Die Lastaufnahmemittel werden beispielsweise mit dem Boden 39 fest verbunden, so daß durch die Scherenanordnung 12 das Grundgestell 13 auf und ab bewegbar ist. Das Grundgestell 13 weist an dessen Oberseite 91 bei dieser Ausführungsform vorteilhafterweise eine U-förmige Profilierung auf, so daß eine Fahrschiene ausgebildet sein kann, damit Kraftfahrzeuge sicher auf das Grundgestell 13 auffahren können. Der Abstand der Scherenanordnungen 12 zueinander kann in Abhängigkeit der Länge der zu hebenden Lasten vorgesehen sein. Des weiteren können in Abhängigkeit der zu hebenden Last zwei, drei oder mehrere Scherenanordnungen 12 an einer Fahrschiene angreifen.

In den Figuren 9 bis 11 sind Anwendungsbeispiele der erfindungsgemäßen Ausführungsformen der Hebevorrichtung 11 dargestellt. In den Figuren 9 a und b ist beispielsweise ein Einsatz der Hebevorrichtung 11 dargestellt, bei welchem die Hebevorrichtung 11 auf einem Werkstattboden 39 angeordnet ist. Die Hebevorrichtungen 11 können sowohl stationär als auch instationär vorgesehen sein. Beispielsweise kann auch nur eine der beiden Hebevorrichtungen 11 stationär angeordnet sein, so daß die zweite Hebevorrichtung 11 individuell an die Fahrzeuglänge oder dergleichen anpaßbar ist. Die Hebevorrichtung 11 gemäß den Figuren 9 a und b ist doppelzylindrig ausgebildet. Das Lastaufnahmemittel 29 ist in der Breite kürzer als die Spurbreite eines Kraftfahrzeuges ausgestaltet, so daß durch geeignete Aufnahmen ein Angriff an den Achsen eines Kraftfahrzeuges ermöglicht ist. Des weiteren kann vorgesehen sein, daß an dem Lastaufnahmemittel 29 Schwenkhebel vorgesehen sind, die beispielsweise an dem Rahmen der Fahrzeuge angreifen können.

In den Figuren 10 a und b ist beispielsweise eine Hebevorrichtung 11 dargestellt, welche in dem Werkstattboden 39 eingelassen ist. Hierbei kann wiederum vorgesehen sein, daß eine der beiden Hebevorrichtungen 11 fest angeordnet und die andere nach links und rechts gemäß den Pfeilen bewegbar ist. Vorteilhafterweise sind beide Scherenanordnungen 12 im Abstand zueinander verschiebbar angeordnet, so daß eine hohe Variabilität gegeben sein kann. Das Lastaufnahmemittel 29 in den Figuren 10 a und b ist beispielsweise derart ausgestaltet, daß diese die Luftreifen eines Fahrzeuges untergreifen.

In den Figuren 11 a und b ist eine weitere alternative Anordnung dargestellt. Die Scherenanordnungen 12 der Hebevorrichtung 11 sind wiederum in einem Fundament im Werkstattboden 39 eingelassen. Diese können im Abstand zueinander beliebig verschiebbar sein. Bei dieser Ausführungsform ist beispielsweise eine einzylindrige Version dargestellt, bei der pro Luftreifen eine Scherenanordnung 12 vorgesehen ist. Bei sehr schweren Lasten kann auch eine doppelzylindrige oder mehrfachzylindrige Ausführungsform pro Luftreifen vorgesehen sein. Es kann ebenso vorteilhafterweise vorgesehen sein, daß die linke Scherenanordnung 12 eine Hubeinheit 17 aufweist und die rechte Scherenanordnung ohne Hubeinheit ausgebildet ist. Die Verbindung zwischen den zwei oder mehreren Scherenanordnungen 12 kann durch eine Verbindungsstange 96 oder als Fahrschiene oder dergleichen ausgebildet sein.

Die Kombination der einzelnen Merkmale für die Auslegung einer Hebevorrichtung 11 auf die entsprechende Nutzlast ist beliebig. Bei den Ausführungsformen gemäß den Figuren 9 bis 11 ist vorteilhafterweise vorgesehen, daß eine gemeinsame Ansteuerung von sämtlichen sich im Einsatz befindlichen Hubeinheiten 17 erfolgt, so daß eine gleichmäßige Anhebung der Last erfolgen kann. Die für eine derartige Vorrichtung erforderlichen Endschalter zur Überwachung der Hubbewegung als auch zur Erfüllung der Sicherheitsvorschriften sind nicht näher dargestellt. Es kann ebenso vorgesehen sein, daß die Hebevorrichtung derart eingesetzt wird, daß beispielsweise das Fahrzeug nur an einem vorderen Ende oder hinteren Ende angehoben wird, um entsprechende Arbeiten daran durchzuführen.

## Patentansprüche

1. Hebevorrichtung für Fahrzeuge, Montageeinheiten, Maschinen oder dergleichen mit zumindest einer Scherenanordnung (12) und einem Grundgestell (13), welches eine erste Lagerstelle (18) mit einer Drehachse (19) aufweist, um die eine Strebe (16) schwenkbar angeordnet ist, mit einem Tragarm (14), der mit der Strebe (16) eine gemeinsame zweite Lagerstelle (21) aufweist, wobei die Strebe (16) den Tragarm (14) in einen ersten und zweiten Tragarmabschnitt (56, 57) teilt und wobei der mit der Strebe (16) und dem Grundgestell (13) ein Dreieck bildender zweiter Tragarmabschnitt (57) von einer vierten Lagerstelle (23) aufgenommen ist, die an einer im Grundgestell (13) hin und her bewegbaren Führung (26) angeordnet ist, mit einem an dem freien Ende des ersten Tragarmabschnittes (56) angeordneten Lastaufnahmemittel (29), welches schwenkbar um eine Drehachse (28) am Tragarm (14) vorgesehen ist und eine fünfte Lagerstelle (27) bildet, und daß dies Lastaufnahmemittel (29) mit einer Parallelogrammführung (12, 41) horizontal ausgerichtet ist, und mit zumindest einer an dem Tragarm (14) angreifenden Hubeinheit (17), **dadurch gekennzeichnet, daß** eine auf die Lastaufnahme (29) wirkende Kraftresultierende (25) zum einen entlang einer zwischen der ersten und fünften Lagerstelle (18, 27) sich erstreckenden Geraden (38) verläuft oder zum anderen außerhalb eines durch die erste, vierte und fünfte Lagerstelle (18, 23, 27) umschriebenen Bewegungsraumes der Scherenanordnung (12) liegt und parallel zu der zwischen der ersten und fünften Lagerstelle sich erstreckenden Gerade (38) verläuft.

2. Hebevorrichtung nach Anspruch 1, **dadurch gekennzeichnet, daß** die Parallelogrammführung (41) als Zugstange ausgebildet ist, wobei die fünfte Lagerstelle (27) der Scherenanordnung (12) die Hubbewegung durchläuft.

3. Hebevorrichtung nach Anspruch 1, **dadurch gekennzeichnet, daß** die Parallelogrammführung (12) als zumindest eine weitere Scherenanordnung mit oder ohne Hubeinheit ausgebildet ist, die mit einem an der ersten Scherenandordnung (12) angreifenden Verbindungselement (96) gekoppelt ist.

4. Hebevorrichtung nach einem der vorhergehenden Ansprüche, **dadurch gekennzeichnet, daß** die Hubeinheit (17) an dem ersten Tragarmabschnitt (56) an einer dritten Lagerstelle (31) mit Abstand zur zweiten Lagerstelle (21) angeordnet ist, so daß zumindest in einer nicht ausgefahrenen Position der Scherenanordnung eine Achse (34), welche sich zwischen der Drehachse (19) der Lagerstelle (18) und der Drehachse (22) der Lagerstelle (21) streckt, in einem spitzen Winkel α zu einer Längsachse (36) der Hubeinheit (17) angeordnet ist.

5. Hebevorrichtung nach einem der vorhergehenden Ansprüche, **dadurch gekennzeichnet, daß** die dritte Lagerstelle (31) außerhalb einer Achse liegt, welche sich zwischen der zweiten Lagerstelle (21) und vierten Lagerstelle (23) erstreckt.

6. Hebevorrichtung nach einem der vorhergehenden Ansprüche, **dadurch gekennzeichnet, daß** die Hubeinheit (17) in der Drehachse (19) der ersten Lagerstelle (18) schwenkbar angeordnet ist.

7. Hebevorrichtung nach einem der vorhergehenden Ansprüche, **dadurch gekennzeichnet, daß** die Länge der Strebe (16) der Länge des ersten und zweiten Tragarmabschnittes (56, 57) des Tragarmes (14) entspricht.

8. Hebevorrichtung nach einem der vorhergehenden Ansprüche, **dadurch gekennzeichnet, daß** parallel zum Tragarm (14) eine Zugstange (41) vorgesehen ist, die an einem Ende an dem Lastaufnahmemittel (29) getrennt von einer fünften Lagerstelle (27) und an dem gegenüberliegenden Ende über einen Schwenkhebel (43) an der vierten Lagerstelle (23) schwenkbar angeordnet ist

9. Hebevorrichtung nach einem der vorhergehenden Ansprüche, **dadurch gekennzeichnet, daß** das Grundgestell (13) instationär oder stationär in oder auf einem Boden (39) angeordnet ist.

10. Hebevorrichtung nach einem der vorhergehenden Ansprüche, **dadurch gekennzeichnet, daß** ein oder mehrere Scherenanordnungen (12) mit einem oder mehreren Hubeinheiten (17) an einem oder mehreren Grundgestellen (13) vorgesehen sind.

11. Hebevorrichtung nach einem der Ansprüche 1 bis 9, **dadurch gekennzeichnet, daß** das Grundgestell (13) als Fahrschiene für Fahrzeuge, Plattform, Aufnahme oder dergleichen ausgebildet ist und die Lastaufnahme (29) am Boden (39) angeordnet ist.

12. Hebevorrichtung nach einem der vorhergehenden Ansprüche, **dadurch gekennzeichnet, daß** die zweite, vierte und fünfte Lagerstelle (21, 23 und 27) in einer gemeinsamen Achse des Tragarmes (14) liegen.

13. Hebevorrichtung nach einem der vorhergehenden Ansprüche, **dadurch gekennzeichnet, daß** die fünfte Lagerstelle (27) rechtwinklig zur Verbindungslinie zwischen der ersten und vierten Lagerstelle (18, 23) entlang der Geraden (38) bewegbar ist.

14. Hebevorrichtung nach einem der vorhergehenden Ansprüche, **dadurch gekennzeichnet, daß** das Grundgestell (13) einen U-förmig ausgebildeten Rahmen aufweist, dessen zwei parallel zueinander angeordnete Schenkel (47, 48) vorzugsweise U-profilförmig ausgebildet sind.

15. Hebevorrichtung nach einem der vorhergehenden Ansprüche, **dadurch gekennzeichnet, daß** die Führung (26) in dem Grundgestell (13) als Führungsschlitten (51) mit wenigstens zwei Führungsrollen (52) oder als Gleitlager ausgebildet ist.

16. Hebevorrichtung nach einem der vorhergehenden Ansprüche, **dadurch gekennzeichnet, daß** die vierte Lagerstelle (23) einen Führungsschlitten (51) mit wenigstens zwei Führungsrollen (52) aufweist, die in einem U-profilförmigen Schenkel (47, 48) des Grundgestells (13) geführt sind und die Führungsrollen (52) an dem Führungsschlitten (51) vorzugsweise derart angeordnet sind, daß die Drehachsen nicht auf einer gemeinsamen horizontalen Ebene liegen.

17. Hebevorrichtung nach Anspruch 13, **dadurch gekennzeichnet, daß** eine Drehachse (24) des Trägerarmes (14) in der vierten Lagerstelle (23) liegt.

18. Hebevorrichtung nach einem der vorhergehenden Ansprüche, **dadurch gekennzeichnet, daß** die Hubeinheit (17) als hydraulischer Zylinder ausgebildet ist und zumindest einen Hubzylinder, vorzugsweise zwei Hubzylinder aufweist.

19. Hebevorrichtung nach einem der vorhergehenden Ansprüche, **dadurch gekennzeichnet, daß** der Tragarm (14) als geschlossener Rahmen ausgebildet ist, wobei eine rechte und linke Tragarmstrebe in der vierten Lagerstelle (23) durch ein Verbindungsstück (58) und in der zweiten Lagerstelle (21) durch ein starres Verbindungsstück (59) und in der fünften Lagerstelle (27) durch die Lastaufnahme miteinander verbunden sind.

20. Hebevorrichtung nach einem der vorhergehenden Ansprüche, **dadurch gekennzeichnet, daß** zwischen den Streben (16) und dem linken und rechten Tragarm (14) zumindest eine Hubeinheit (17) angeordnet ist.

21. Hebevorrichtung nach einem der vorhergehenden Ansprüche, **dadurch gekennzeichnet, daß** eine spiegelbildliche Ausgestaltung entlang einer Längsachse der Scherenanordnung (12) und des Grundgestells (13) vorgesehen ist.

22. Hebevorrichtung nach einem der vorhergehenden Ansprüche, **dadurch gekennzeichnet, daß** die Hubeinheit (17) mittelbar an dem Tragarm (14) angreift.

23. Hebevorrichtung nach Anspruch 22, **dadurch gekennzeichnet, daß** die dritte Lagerstelle (31) der Hubeinheit (17) an einem Drehhebel (71) angeordnet ist, der an einer achten Lagerstelle (73) schwenkbar an dem ersten Tragarmabschnitt (56) angeordnet ist.

24. Hebevorrichtung nach einem der Ansprüche 22 oder 23, **dadurch gekennzeichnet, daß** der Drehhebel (71) eine Druckrolle (74) aufweist, die im nicht ausgefahrenen Zustand der Scherenanordnung (12) in einer Ausnehmung (76) der Strebe (16) anliegt.

25. Hebevorrichtung nach einem der Ansprüche 22 bis 24, **dadurch gekennzeichnet, daß** während einer ersten Phase der Hubbewegung der Drehhebel (71) durch die Hubeinheit (17) geschwenkt wird und die Druckrolle (74) sich gegenüber der Ausnehmung (76) der Strebe (16) abstützt und den Tragarm (14) anhebt.

26. Hebevorrichtung nach einem der Ansprüche 22 bis 25, **dadurch gekennzeichnet, daß** in einer zweiten Phase der Hubbewegung die Drehbewegung des Drehhebels (71) durch einen an dem Drehhebel (71) angeordneten Anschlag (77) gesperrt wird und an einem Vorsprung (78) nahe des zweiten Lagers (21) anliegt.

27. Hebevorrichtung nach einem der Ansprüche 22 bis 26, **dadurch gekennzeichnet, daß** in einer dritten Phase der Hubbewegung zumindest ein Hubzylinder unmittelbar den Tragarm (14) anhebt und vorzugsweise der Drehhebel (71) mit seinem Anschlag (77) gegenüber dem Vorsprung (78) sich löst.

28. Hebevorrichtung nach einem der Ansprüche 22 bis 27, **dadurch gekennzeichnet, daß** ein zwischen der achten Lagerstelle (73) und der dritten Lagerstelle (31) gebildeter Hebelarm gleich groß oder größer als ein zwischen der achten Lagerstelle (73) und einer Drehachse der Druckrolle (74) ausgebildeter Hebelarm ist.

29. Hebevorrichtung nach Anspruch 1, **dadurch gekennzeichnet, daß** die Scherenanordnung (12) als Halbschere ausgebildet ist.

## Claims

1. A lifting apparatus for motor vehicles, mounting units, machines, or the like with at least one scissors arrangement (12) and a base frame (13), comprising a first bearing (18) with a rotation axis (19) to which a strut (16) is arranged pivotable, a carrier arm (14) that has a second bearing (21) in common with the strut (16), which strut (16) is dividing the carrier arm (14) into a first and a second carrier arm section (56, 57), and which second carrier arm section (57) forming a triangle with the strut (16) and the base frame (13) is arranged to a fourth bearing (23) that is arranged on the guide (26) movable back and forth on the base frame (13), with a load receiver (29) arranged at a free end of the said first carrier arm section(56) which is pivotable to a rotation axis (28) of the carrier arm (14) and providing a fifth bearing (27) and that the load receiver (29) is aligned horizontally with a parallelogram guide (12, 41) and at least one lifting unit (17) acts on the carrier arm (14), **characterized in that** a resultant force (25) acting on the load receiver (29) runs along a straight line (38) extending between the first and fifth bearing (18, 27) or is situated outside a movement space of said scissors arrangement (12) circumscribed by the first, fourth and fifth bearing (18, 23, 27) and parallel to the straight line (38) extending between the first and the fifth bearing.

2. The lifting apparatus according to claim 1, **characterized in that** the parallelogram guide (41) comprises a pull rod, whereby a lifting movement is running through the fifth bearing (27) of the scissors arrangement (12).

3. The lifting apparatus according to claim 1, **characterized in that** the parallelogram guide (12) comprises at least a further scissors arrangement coupled with a connecting element (96) acting on the first scissors arrangement (12) and the at least one further scissors arrangement being with or without a lifting unit.

4. The lifting apparatus according to one of the proceeding claims, **characterized in that** the lifting unit (17) is arranged on the first carrier arm section (56) at a third bearing (31) spaced from the second bearing (21) so that at least in an unextended position of the scissors arrangement an axis (34) that extends between said rotation axis (19) of the first bearing (18) and the rotation axis (22) of the second bearing (21) is arranged at an acute angle α to a longitudinal axis (36) of the lifting unit (17).

5. The lifting apparatus according to one of the proceeding claims, **characterized in that** the third bearing unit (31) is situated outside an axis that extends between the second bearing (21) and the fourth bearing (23).

6. The lifting apparatus according to one of the proceeding claims, **characterized in that** the lifting unit (17) is arranged pivotable on the rotation axis (19) of the first bearing (18).

7. The lifting apparatus according to one of the proceeding claims, **characterized in that** the length of the strut (16) corresponds to the length of at least one of the first and second carrier arm sections (56, 57) of the carrier arm (14).

8. The lifting apparatus according to one of the proceeding claims, **characterized in that** a pull rod (41) is arranged parallel to the carrier arm (14) and arranged pivotable at one end on the load receiver (29) separated from the fifth bearing (27) and connected to the fourth bearing (23) at an opposite end by a pivot lever (43).

9. The lifting apparatus according to one of the proceeding claims, **characterized in that** the base frame (13) is arranged movably or stationary in or on a floor (39).

10. The lifting apparatus according to one of the proceeding claims, **characterized in that** one or several scissors arrangements (12) with at least one lifting unit (17) are arranged on one or several base frame (13).

11. The lifting apparatus according to one of the claims 1 to 9, **characterized in that** the base frame (13) comprises a rail for a vehicle, a platform, a receiver and the like, and the load receiver (29) is arranged on a floor (39).

12. The lifting apparatus according to one of the proceeding claims, **characterized in that** the second, fourth, and fifth bearings (21, 23 and 27) are situated on a common axis of said carrier arm (14).

13. The lifting apparatus according to one of the proceeding claims, **characterized in that** the fifth bearing (27) is movable along a straight line (38) at a right angle to a line connecting between the first and fourth bearings (18, 23).

14. The lifting apparatus according to one of the proceeding claims, **characterized in that** the base frame (13) comprises a U-shaped frame having two legs (47, 48) aligned mutually parallel, preferably in a U-shaped profile.

15. The lifting apparatus according to one of the proceeding claims, **characterized in that** the guide (26) in the base frame (13) is provided as a guide block (51) having at least two guide rollers (52) or a plain bearing.

16. The lifting apparatus according to one of the proceeding claims, **characterized in that** the fourth bearing (23) is provided with a guide block (51) having at least two guide rollers (52) which are guided in a U-shaped profile leg (47, 48) of the base frame (13) and the guide rollers (52) are arranged on the guide block (51) preferably such that their rotation axes do not lie on a common horizontal plane.

17. The lifting apparatus according to claim 13, **characterized in that** a rotation axis (24) of the carrier arm (14) lies on the fourth bearing (23).

18. The lifting apparatus according to one of the proceeding claims, **characterized in that** the lifting unit (17) comprises a hydraulic cylinder and has at least one, in particular two, lifting cylinder.

19. The lifting apparatus according to one of the proceeding claims, **characterized in that** the carrier arm (14) comprises a closed frame with a right-hand and left-hand carrier arm strut connected together at the fourth bearing (23) by a connecting piece (58), and at the second bearing (21) by a rigid connecting piece (59), and at the fifth bearing (27) by the load receiver.

20. The lifting apparatus according to one of the proceeding claims, **characterized in that** at least one lifting unit (17) is arranged between the strut (16) and the left-hand and right-hand carrier arm (14).

21. The lifting apparatus according to one of the proceeding claims, **characterized in that** a mirror-image configuration along a longitudinal axis of the said scissors arrangement (12) and the base frame (13) is provided.

22. The lifting apparatus according to one of the proceeding claims, **characterized in that** the lifting unit (17) acts indirectly on the carrier arm (14).

23. The lifting apparatus according to claim 22, **characterized in that** a rotary lever (71) is arranged on the third bearing (31) of the lifting unit (17) which rotary lever being arranged pivotable on the first carrier arm section (56) at an eighth bearing (73).

24. The lifting apparatus according to claim 22 or 23, **characterised in that** the rotary lever (71) comprises a pressure roller (74) that, in the unextended state of the scissors arrangement (12), abuts in a recess (76) of the strut (16).

25. The lifting apparatus according to one of the claims 22 to 24, **characterized in that** in a first phase of lifting movement, the rotary lever (71) is pivoted by the lifting unit (17) and the pressure roller (74) is supported against the recess (76) of the strut (16) and lifts up the carrier arm (14).

26. The lifting apparatus according to one of the claims 22 to 25, **characterized in that** a second phase of lifting movement, rotary movement of the rotary lever (71) is locked by a stop (77) arranged on the rotary lever (71), and the rotary lever (71) abuts on a projection (78) near the second bearing (21).

27. The lifting apparatus according to one of the claims 22 to 26, **characterized in that** in a third phase of the lifting movement the at least one lifting cylinder directly lifts the carrier arm (14) and preferably the rotary lever is released with its stop (77) opposite the projection (78).

28. The lifting apparatus according to one of the claims 22 to 27, **characterized in that** a lever arm formed between the eighth bearing (73) and the third bearing (31) that is equal or larger than a lever arm formed between the eighth bearing (73) and a rotation axis of the pressure roller (74).

29. The lifting apparatus according to claim 1, **characterized in that** the scissors arrangement (12) comprises a half scissors.

## Revendications

1. Dispositif de levage pour véhicules, unités de montage, machines ou similaires, comprenant au moins un agencement en ciseaux (12) et un bâti de base (13), qui présente un premier point d'appui (18) avec un axe de pivotement (19) autour duquel est disposé un montant (16) pouvant pivoter, avec un bras de support (14) qui présente avec le montant (16) un deuxième point d'appui commun (21), le montant (16) divisant le bras de support (14) en une première et une deuxième portion de bras de support (56, 57) et la deuxième portion de bras de support (57) formant un triangle avec le montant (16) et le bâti de base (13) étant reçu par un quatrième point d'appui (23) qui est disposé sur une glissière (26) pouvant aller et venir dans le bâti de base (13), avec un moyen de réception de charge (29) disposé à l'extrémité libre de la première portion de bras de support (56), lequel est prévu de manière à pouvoir pivoter autour d'un axe de rotation (28) sur le bras de support (14) et forme un cinquième point d'appui (27), le moyen de réception de charge (29) étant orienté horizontalement avec un système de guidage par parallélogramme (12, 41), et avec au moins une unité de levage (17) venant en prise sur le bras de support (14), **caractérisé en ce qu'**une résultante de force (25) agissant sur le moyen de réception de charge (29) s'étend d'une part le long d'une droite (38) s'étendant entre le premier et le cinquième point d'appui (18, 27) ou d'autre part en dehors d'un espace de déplacement de l'agencement en ciseaux (12) décrit par le premier, le quatrième et le cinquième point d'appui (18, 23, 27) et s'étend parallèlement à la droite (38) s'étendant entre le premier et le cinquième point d'appui.

2. Dispositif de levage selon la revendication 1, **caractérisé en ce que** le système de guidage par parallélogramme. (41) est réalisé sous la forme d'une barre de traction, le cinquième point d'appui (27) de l'agencement en ciseaux (12) parcourant le mouvement de levage.

3. Dispositif de levage selon la revendication 1, **caractérisé en ce que** le système de guidage par parallélogramme (41) est réalisé sous la forme d'au moins un agencement en ciseaux supplémentaire avec ou sans unité de levage, qui est accouplé à un élément de liaison (96) venant en prise sur le premier agencement en ciseaux (12).

4. Dispositif de levage selon l'une quelconque des revendications précédentes, **caractérisé en ce que** l'unité de levage (17) est disposée sur la première portion de bras de support (56) au niveau d'un troisième point d'appui (31) espacé du deuxième point d'appui (21), de sorte qu'au moins dans une position non déployée de l'agencement en ciseaux, un axe (34), qui s'étend entre l'axe de rotation (19) du point d'appui (18) et l'axe de rotation (22) du point d'appui (21), soit disposé suivant un angle aigu α par rapport à un axe longitudinal (36) de l'unité de levage (17).

5. Dispositif de levage selon l'une quelconque des revendications précédentes, **caractérisé en ce que** le troisième point d'appui (31) se trouve en dehors d'un axe qui s'étend entre le deuxième point d'appui (21) et le quatrième point d'appui (23).

6. Dispositif de levage selon l'une quelconque des revendications précédentes, **caractérisé en ce que** l'unité de levage (17) est disposé de manière à pouvoir pivoter dans l'axe de rotation (19) du premier point d'appui (18).

7. Dispositif de levage selon l'une quelconque des revendications précédentes, **caractérisé en ce que** la longueur du montant (16) correspond à la longueur de la première et de la deuxième portion de bras de support (56, 57) du bras de support (14).

8. Dispositif de levage selon l'une quelconque des revendications précédentes, **caractérisé en ce qu'**une barre de traction (41) est prévue parallèlement au bras de support (14), laquelle est disposée de manière à pouvoir pivoter à une extrémité sur le moyen de réception de charge (29) séparément d'un cinquième point d'appui (27) et à l'extrémité opposée par le biais d'un levier pivotant (43) sur le quatrième point d'appui (23).

9. Dispositif de levage selon l'une quelconque des revendications précédentes, **caractérisé en ce que** le bâti de base (13) est disposé dans ou sur un sol (39) de manière stationnaire ou non stationnaire.

10. Dispositif de levage selon l'une quelconque des revendications précédentes, **caractérisé en ce qu'**un ou plusieurs agencements à ciseaux (12) sont pourvus d'une ou de plusieurs unités de levage (17) sur un ou plusieurs bâtis de base (13).

11. Dispositif de levage selon l'une quelconque des revendications 1 à 9, **caractérisé en ce que** le bâti de base (13) est réalisé sous la forme de rail de roulement pour véhicules, plate-forme, logement, ou similaire et le moyen de réception de charge (29) est disposé sur le sol (39).

12. Dispositif de levage selon l'une quelconque des revendications précédentes, **caractérisé en ce que** le deuxième, quatrième et cinquième point d'appui (21, 23 et 27) se trouvent sur un axe commun du bras de support (14).

13. Dispositif de levage selon l'une quelconque des revendications précédentes, **caractérisé en ce que** le cinquième point d'appui (27) peut être déplacé le long de la droite (38) perpendiculairement à la ligne de liaison entre le premier et le quatrième point d'appui (18, 23).

14. Dispositif de levage selon l'une quelconque des revendications précédentes, **caractérisé en ce que** le bâti de base (13) présente un châssis réalisé en forme de U, dont deux branches (47, 48) disposées parallèlement l'une à l'autre sont réalisées de préférence avec un profil en forme de U.

15. Dispositif de levage selon l'une quelconque des revendications précédentes, **caractérisé en ce que** la glissière (26) dans le bâti de base (13) est réalisée sous la forme d'un chariot de guidage (51) avec au moins deux galets de guidage (52), ou est réalisée sous la forme de palier lisse.

16. Dispositif de levage selon l'une quelconque des revendications précédentes, **caractérisé en ce que** le quatrième point d'appui (23) présente un chariot de guidage (51) avec au moins deux galets de guidage (52), qui sont guidés dans une branche (47,48) du bâti de base (13) de profil en forme de U et les galets de guidages (52) sont disposés sur le chariot de guidage (51) de préférence de telle sorte que les axes de rotation ne se trouvent pas sur un plan horizontal commun.

17. Dispositif de levage selon la revendication 13, **caractérisé en ce qu'**un axe de rotation (24) du bras de support (14) se trouve dans le quatrième point d'appui (23).

18. Dispositif de levage selon l'une quelconque des revendications précédentes, **caractérisé en ce que** l'unité de levage (17) est réalisée sous la forme d'un vérin hydraulique et présente au moins un vérin de levage, de préférence deux vérins de levage.

19. Dispositif de levage selon l'une quelconque des revendications précédentes, **caractérisé en ce que** le bras de support (14) est réalisé sous la forme d'un châssis fermé, un montant droit et un montant gauche du bras de support étant connectés l'un à l'autre dans le quatrième point d'appui (23) par une pièce de connexion (58) et dans le deuxième point d'appui (21) par une pièce de connexion rigide (59) et dans le cinquième point d'appui (27) par le moyen de réception de charge.

20. Dispositif de levage selon l'une quelconque des revendications précédentes, **caractérisé en ce qu'**au moins une unité de levage (17) est disposée entre les montants (16) et le bras de support gauche et droit (14).

21. Dispositif de levage selon l'une quelconque des revendications précédentes, **caractérisé en ce qu'**une configuration à symétrie spéculaire est prévue le long d'un axe longitudinal de l'agencement à ciseaux (12) et du bâti de base (13).

22. Dispositif de levage selon l'une quelconque des revendications précédentes, **caractérisé en ce que** l'unité de levage (17) vient en prise sur le bras de support (14) de manière indirecte.

23. Dispositif de levage selon la revendication 22, **caractérisé en ce que** le troisième point d'appui (31) de l'unité de levage (17) est disposé sur un levier pivotant (71) qui est disposé sur la première portion de bras de support (56) de manière à pouvoir pivoter sur un huitième point d'appui (73).

24. Dispositif de levage selon l'une quelconque des revendications 22 ou 23, **caractérisé en ce que** le levier pivotant (71) présente un galet presseur (74) qui s'applique dans l'état non déployé de l'agencement à ciseaux (12) dans un évidement (76) du montant (16).

25. Dispositif de levage selon l'une quelconque des revendications 22 à 24, **caractérisé en ce que** pendant une première phase du mouvement de levage, le levier pivotant (71) est pivoté par l'unité de levage (17) et le galet presseur (74) s'appuie contre l'évidement (76) du montant (16) et soulève le bras de support (14).

26. Dispositif de levage selon l'une quelconque des revendications 22 à 25, **caractérisé en ce que** dans une deuxième phase du mouvement de levage, le mouvement de pivotement du levier pivotant (71) est bloqué par une butée (77) disposée sur le levier pivotant (71) et qui s'applique contre une saillie (78) à proximité du deuxième point d'appui (21).

27. Dispositif de levage selon l'une quelconque des revendications 22 à 26, **caractérisé en ce que** dans une troisième phase du mouvement de levage, au moins un vérin de levage soulève directement le bras de support (14) et de préférence le levier pivotant (71) avec sa butée (77) se dégage par rapport à la saillie (78).

28. Dispositif de levage selon l'une quelconque des revendications 22 à 27, **caractérisé en ce qu'**un bras de levier formé entre le huitième point d'appui (73) et le troisième point d'appui (31) est supérieur ou égal à un bras de levier réalisé entre le huitième point d'appui (73) et un axe de rotation du galet presseur (74).

29. Dispositif de levage selon la revendication 1, **caractérisé en ce que** l'agencement à ciseaux (12) est réalisé sous la forme de demi-ciseaux.
